(19) Europäisches Patentamt
European Patent Office
Office européen des brevets

(11) Numéro de publication: **0 032 096**
**B1**

(12) # FASCICULE DE BREVET EUROPEEN

(45) Date de publication du fascicule du brevet: **08.08.84**

(51) Int. Cl.³: **C 01 B 3/02**

(21) Numéro de dépôt: **80401871.1**

(22) Date de dépôt: **26.12.80**

(54) **Procédé de production d'ammoniac et du gaz de synthèse correspondant.**

(30) Priorité: **07.01.80 FR 8000196**

(43) Date de publication de la demande:
**15.07.81 Bulletin 81/28**

(45) Mention de la délivrance du brevet:
**08.08.84 Bulletin 84/32**

(84) Etats contractants désignés:
**AT BE DE GB IT NL SE**

(56) Documents cités:
FR - A - 1 409 027
FR - A - 1 604 197
FR - A - 2 005 657
FR - A - 2 044 617
FR - A - 2 045 420
US - A - 3 442 613
US - A - 4 079 017
US - A - 4 148 886
US - A - 4 153 673

(73) Titulaire: **FOSTER WHEELER ENERGY CORPORATION**
**110 South Orange Avenue**
**Livingston New Jersey 07039 (US)**

(72) Inventeur: **Banquy, David Léon**
**39, Rue Saint-Placide**
**F-75006 Paris (FR)**

(74) Mandataire: **Chameroy, Claude**
**c/o Cabinet Malemont 42, avenue du Président Wilson**
**F-75116 Paris (FR)**

**EP 0 032 096 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La synthèse industrielle de l'ammoniac est réalisée à partir d'un gaz de synthèse contenant un rapport moléculaire H2/N2 aussi voisin que possible de la stoechiométrie de la réaction, c'est à dire 3.0, et des teneurs en gaz inertes tels que l'argon et le méthane que l'on cherche à réduire au minimum. Les procédés de production d'ammoniac par réformage à la vapeur des hydrocarbures sont décrits en particulier dans les brevets US 2829113, US 3278452, US 3264066, US 3388074, US 3442613, US 4079017, US 4148866, et US 4153673.

Dans le procédé le plus couramment utilisé pour la production de gaz de synthèse d'ammoniac à partir d'hydrocarbures légers, allant du gaz naturel au naphta, toute la matière première subit d'abord un réformage primaire à la vapeur, à une température voisine de 800°C et sous une pression de l'ordre de 25 à 35 bars, dans des tubes chauffés extérieurement et remplis de catalyseur de réformage. Dans cette opération, la quantité de vapeur utilisée est exprimée par le rapport vapeur/carbone, c'est à dire le nombre de molécules H2O par atome de carbone d'hydrocarbure; ledit rapport est presque toujours supérieur à 3.0, et même souvent voisin de 4.0. Le gaz produit par cette réaction est ensuite traité dans un réformage secondaire à l'air, au contact d'un catalyseur de réformage à une température de 1000°C environ, dans un réacteur fonctionnant adiabatiquement, par réaction avec la quantité d'air juste nécessaire pour obtenir dans le gaz de synthèse final un rapport moléculaire H2/N2 égal à 3.0. Ladite température de 1000°C environ est imposée par la nécessité d'avoir une teneur résiduaire en méthane inférieure à 0.6 pour cent en volume environ dans le gaz sortant dudit réacteur, afin d'éviter les purges excessives dans le circuit de synthèse de l'ammoniac. En conséquence, comme la quantité d'air utilisée dans cette réaction est aussi limitée par la stoechiométrie de la synthèse de l'ammoniac, il se trouve que la température de sortie du réformage primaire doit aussi être au dessus d'un certain minimum, voisin de 800°C. Le gaz sortant du réformage secondaire subit ensuite une réaction de conversion du CO en CO2, puis un lavage par solvant pour éliminer la quasi totalité du CO2 contenu dans le gaz, puis une réaction de méthanation pour convertir en méthane les dernières traces de CO et de CO2, lesquelles sont des poisons du catalyseur de synthèse de l'ammoniac.

Le procédé habituel décrit ci-dessus comporte essentiellement deux inconvénients majeurs. En premier lieu, on doit utiliser une quantité importante de vapeur dans la réaction de réformage primaire, c'est à dire un rapport vapeur/carbone supérieur à 3.0 environ, à cause du minimum nécessaire pour éviter la formation de carbone sur le catalyseur, et pour obtenir une teneur acceptable en méthane dans le gaz produit à la sortie des réformages primaire et secondaire. Cette forte consommation de vapeur pénalise doublement le procédé habituel, à cause non seulement de la consommation d'énergie correspondante, mais aussi à cause des investissements nécessaires pour les équipements destinés à produire ladite vapeur. En second lieu, du fait de la température minimale d'environ 800°C à la sortie du réformage primaire, la métallurgie des tubes de celui-ci oblige à limiter la pression des réformages primaire et secondaire à environ 40 bars; en conséquence, on doit dépenser une quantité importante d'énergie pour comprimer le gaz de synthèse produit, dont le volume est environ quatre fois celui de la matière première, jusqu'à la pression de synthèse de l'ammoniac, souvent comprise entre 200 et 400 bar.

Le procédé décrit dans le brevet US 3442613 a le mérite d'éviter le second inconvénient sus-mentionné, en utilisant dans le réformage secondaire une quantité d'air sensiblement supérieure à celle nécessitée par la stoechiométrie de la synthèse de l'ammoniac, l'excès d'azote étant éliminé en aval par séparation cryogénique. Néanmoins, la quantité de vapeur que l'on doit utiliser dans ce procédé au réformage primaire est aussi élevée que dans le procédé habituel. De plus, le procédé du brevet US 3442613 fonctionne avec une teneur en méthane dans la charge du reformage secondaire plafonnée à 50 pour cent en volume sur gaz sec, c'est à dire que le procédé ne tire pas pleinement avantage de la réduction du degré de réformage réalisé dans le four de réformage primaire.

Le procédé décrit dans le brevet US 3278452 permet de produire directement un gaz de synthèse d'ammoniac ayant la composition stoechiométrique, tout en réalisant une économie substantielle sur la vapeur nécessaire au réformage primaire, du fait que seule une partie de la matière première est traitée dans celui-ci, l'autre allant directement au réformage secondaire. Néanmoins ledit procédé présente l'inconvénient de nécessiter l'utilisation d'un air enrichi en oxygène dans le réformage secondaire, la production de cet oxygène étant coûteuse en investissements et en consommation d'énergie. De plus, ledit procédé réalise le réformage secondaire en deux ou plusieurs étapes, avec une injection de gaz riche en oxygène à l'entrée de chaque étape; or, il est pratiquement impossible de construire un tel système, car l'oxygène que l'on doit injecter dans la seconde étape et les étapes successives doit être mélangé à un gaz à très haute température venant de l'étape précédente, ce qui pose des problèmes technologiques compliqués; non seulement on doit utiliser des matériaux spéciaux et coûteux dans la zone de mélange, mais on doit aussi prévoir l'accès à ladite zone pour les besoins de l'entretien, ce

qui a pour conséquence d'augmenter le volume du réacteur. De plus, comme la température du mélange réactionnel augmente progressivement du premier lit de catalyseur au dernier, le volume total de catalyseur ainsi utilisé est sensiblement supérieur à celui qui serait utilisé si la réaction était réalisée en une seule étape sur un seul lit de catalyseur, car dans ce cas tout le catalyseur serait à très haute température, supérieure ou égale à la température de sortie du gaz produit.

Le procédé de la présente invention comme défini dans les revendications a précisément pour objet principal d'éviter simultanément les deux inconvénients sus-mentionnés du procédé habituel de réformage à la vapeur, c'est à dire d'une part de réduire sensiblement la température de fonctionnement du réformage primaire, ce qui permet correlativement d'augmenter la pression de marche et de réduire la consommation de combustible dudit réformage, et d'autre part de réduire substantiellement la quantité de vapeur nécessaire au procédé, réalisant ainsi une économie d'énergie.

Un autre objet de la présente invention est de réaliser une économie d'investissement par rapport au procédé habituel de production de gaz de synthèse d'ammoniac.

Un autre objet de la présente invention est de remplacer une partie du combustible noble nécessaire dans le procédé habituel de réformage à la vapeur, c'est à dire ayant une faible teneur en soufre et en métaux lourds, par de l'énergie électrique qui serait moins onéreuse si elle est produite dans des centrales nucléaires ou des centrales à charbon.

La présente invention concerne la production par réformage sous pression élevée, c'est à dire supérieure à 30 bars, et de préférence supérieure à 50 bars, d'un gaz de synthèse d'ammoniac ayant la composition stoechiométrique, en réduisant au minimum la consommation d'énergie et le coût de l'investissement.

N'importe quelle matière première pouvant subir une réaction de réformage à la vapeur peut être utilisée dans le procédé de la présente invention. Dans le cadre de la technologie actuelle, les matières premières hydrocarbonées qui peuvent subir un réformage à la vapeur sont essentiellement constituées d'hydrocarbures légers, allant du méthane au naphta ayant un point final d'ébullition de l'ordre de 220°C.

Il est bien connu que tous les procédés catalytiques, que ce soit réformage à la vapeur ou à l'air, pour la production de gaz de synthèse à partir d'hydrocarbures, exigent une désulfuration poussée de la matière première avant de subir la réaction de réformage. En conséquence, je supposerai que la matière première est désulfurée en vue de l'utilisation dans le procédé de la présente invention.

Le principe général dudit procédé consiste à traiter dans un réformage primaire à la vapeur une partie seulement de la matière première, représentant moins que 70 pour cent de la charge totale du procédé, et de préférence moins que 50 pour cent de ladite charge totale, et au minimum 5 pour cent de ladite charge totale. Le gaz produit par cette réaction est ensuite mélangé avec l'autre fraction de la matière première, et le mélange ainsi obtenu est traité dans un réformage secondaire à l'air, au contact d'un catalyseur dans un réacteur fonctionnant adiabatiquement, et dans lequel la quantité d'azote ainsi introduite est sensiblement supérieure à celle qui serait nécessaire pour obtenir la composition stoechiométrique pour la synthèse de l'ammoniac. La pression à l'entrée du réformage primaire à la vapeur est au moins égale à 30 bars, et de préférence au moins égale à 50 bars. Le gaz produit au réformage secondaire à l'air subit ensuite une réaction de conversion pour convertir la quasi totalité du CO en $CO_2$, puis ensuite un lavage par solvant pour éliminer la quasi totalité du $CO_2$, puis ensuite un réaction catalytique de méthanation pour convertir en méthane la quasi totalité des oxydes du carbone présents dans le gaz. Après ladite réaction de méthanation, le gaz contient un rapport moléculaire $H_2/N_2$ inférieur à 2.4, et de préférence inférieur à 2.0; ledit gaz est ensuite désseché puis refroidi à très basse température pour condenser pratiquement tout le méthane et la quantité excédentaire d'azote dans le gaz, de façon à obtenir un gaz de synthèse ayant la composition stoechiométrique pour la synthèse de l'ammoniac. Ledit gaz de synthèse est ensuite comprimé puis injecté dans une boucle de synthèse d'ammoniac, dont on extrait l'ammoniac sous forme liquide.

L'oxygène contenu dans l'air excédentaire utilisé au réformage secondaire sert à fournir par combustion la chaleur nécessaire au réformage de la seconde fraction de la matière première qui n'a pas subit de réformage à la vapeur, et ledit oxygène sert aussi à soulager le degré de réformage primaire à la vapeur, c'est à dire en fait à baisser la température de sortie de celui-ci, ce qui permet de faire fonctionner ledit réformage primaire, ainsi que toute la chaîne de production de gaz de synthèse, à une pression supérieure à celle utilisée habituellement.

J'ai observé dans l'industrie des gaz de synthèse que le traitement d'une matière première hydrocarbonée dans un réformage adiabatique à l'air ou à l'oxygène libre, en présence de catalyseur, ne nécessite qu'une faible quantité de vapeur, beaucoup plus faible que celle nécessaire pour un réformage à la vapeur, dans des tubes de catalyseurs chauffés extérieurement. Cela peut s'expliquer par la forte réaction exothermique qui se produit instantanément au contact de l'oxygène libre dans le réacteur de réformage adiabatique, ce qui porte instantanément le mélange réactionnel à une température supérieure à 750°C, et même souvent supérieure à 900°C,

évitant ainsi la zone de température dangereuse pour la formation de particules de carbone, qui se situe entre 450 et 650°C environ. Par contre, dans le réformage à la vapeur, la réaction très endothermique se produit lentement par apport de la chaleur transmise à travers les parois du tube rempli de catalyseur, et l'on a alors besoin d'une quantité importante de vapeur pour traverser lentement sans risque ladite zone de temperature dangereuse. Par ailleurs, il est bien connu, comme rapporté dans le brevet US 3278452, que la présence d'hydrogène dans la charge d'un réformage adiabatique à l'oxygène ou à l'air, en présence de catalyseur, contribue beaucoup à éviter les risques de formation de particules de carbone, du fait que l'hydrogène réagit instantanément avec l'oxygène, beaucoup plus rapidement que tous les hydrocarbures.

Ainsi, dans le procédé de la présente invention, le fait de traiter dans le réformage primaire en amont une fraction seulement de la charge totale, permet d'une part de réduire sensiblement les besoins globaux de vapeur pour le réformage de la totalité de la charge, et d'autre part de disposer d'une quantité suffisante d'hydrogène dans la charge entrant au réformage secondaire adiabatique à l'air pour éviter les risques de formation de carbone. Ladite charge du réformage secondaire à l'air est constituée du mélange du gaz produit au réformage primaire avec la seconde fraction de la matière première qui n'a pas subi de réaction de réformage à la vapeur. Dans toutes les représentations de la présente invention, la teneur en hydrogène dans la charge entrant au réformage secondaire à l'air doit être au moins de 5 molécules pour cent, sur la base du gaz sec, et de préférence au moins 8 molécules pour cent. Une partie de l'hydrogène contenu dans la charge du réformage secondaire peut provenir en outre de l'une quelconque des sources suivantes, ou de n'importe quelle combinaison de ces sources:recyclage total ou patiel du gaz obtenu par la détente à une pression quelconque du solvant utilise pour l'élimination du $CO2$ du gaz de synthèse brut après la conversion du CO en $CO2$; recyclage d'une partie du gaz de synthèse prélevée après la conversion du CO et avant l'élimination du $CO2$; recyclage d'une partie du gaz de synthèse prélevée après l'élimination de $CO2$ et avant la méthanation; recyclage d'une partie du gaz de synthèse prélevée après la réaction de méthanation et avant la séparation de l'escès d'azote par cryogénie; recyclage d'une partie du gaz de synthèse prélevée après la séparation de l'excès d'azote par cryogénie et avant la synthèse de l'ammoniac; recyclage d'une partie ou de la totalité du gaz de purge provenant de la boucle de synthèse d'ammoniac, soit tel quel soit après traitement approprié ayant pour objet d'augmenter la teneur en hydrogène dudit gaz de purge.

Dans le procédé de la présente invention, la température de sortie du réformage primaire à la vapeur est comprise entre 680 et 820°C, et de préférence entre 720 et 780°C, c'est à dire sensiblement inférieure à celle utilisée habituellement pour la production de gaz de synthèse d'ammoniac; il s'ensuit que la chaleur libérée dans le four de réformage primaire, traitant une fraction seulement de la charge totale, est très faible par rapport à celle libérée dans le procédé habituel. Dans ces conditions, et contrairement au procédé habituel, la quantité de vapeur récupérée dans le procédé peut être insuffisante pour entraîner toutes les machines tournantes importantes de l'unité d'ammoniac. Ainsi, le complément éventuel d'énergie nécessaire pour entraîner ces machines sera de préférence l'électricité, dont le coût peut être plus avantageux si elle est de source nucléaire, ou si elle est produite à partir de charbon.

Une autre conséquence de la très faible chaleur libérée au four de réformage primaire, par rapport au procédé habituel, est que le coût dudit four devient très faible dans l'investissement total de l'unité d'ammoniac. Or comme le coût de ce four augmente presque linéairement en fonction de la capacité, alors que les autres équipements augmentent beaucoup moins que linéairement, on peut ainsi réaliser, pour les grandes capacités, des économies substantielles d'investissement par le procédé de la présente invention.

Afin de limite davantage les besoins de vapeur à haute pression pour le réformage de la matière première, le procédé de la présente invention utilise de préférence un système de saturateur-désurchauffer déjà appliqué industriellement pour véhiculer la chaleur sous forme de vapeur d'un gaz à un autre. Par application de ce système au cas présent, le gaz de synthèse chaud sortant de la réaction de conversion du CO en $CO2$ est refroidi dans un désurchauffeur par contact direct à contrecourant avec de l'eau qui se trouve ainsi chauffée. Alternativement, le désurchauffeur peut être remplacé, en totalité ou en partie, par un échangeur à surface dans lequel l'eau est chauffée à l'aide des calories à bas niveau du gaz de synthèse. L'eau chaude ainsi obtenue est ensuite utilisée pour saturer de vapeur d'eau un, deux ou trois des gaz suivants: l'air destiné au réformage secondaire à l'air, la fraction de la charge destinée au réformage primaire à la vapeur, la fraction de la charge allant directement au réformage secondaire à l'air, ou la totalité de la charge avant le partage entre les deux fractions. Le complément de vapeur d'eau nécessaire pour les réactions de réformages primaire et secondaire, compte tenu de la vapeur véhiculée par le système de saturateur-désurchauffeur, sera apporté par la vapeur haute pression produite par une chaudière de récupération placée à la sortie du réformage secondaire, et éventuellement par une autre chaudière de récupération placée dans le circuit de synthèse d'ammoniac.

Afin de limiter encore davantage la quantité de vapeur nécessaire à la réaction de réformage primaire à la vapeur, le procédé de la présente invention met à profit de préférence une observation que j'ai faite concernant le risque de formation de carbone dans ladite réaction de réformage, à savoir que le CO2 peut remplacer partiellement la vapeur d'eau pour éviter ledit risque, dans la mesure où la composition du mélange gazeux à l'équilibre chimique en fin de réaction n'indique aucune tendance à la formation de carbone par l'une des réactions possibles, qui sont:

$$2\ CO \rightarrow CO2 + C \qquad (1)$$

$$CO + H2 \rightarrow H2O + C \qquad (2)$$

$$CH4 \rightarrow 2\ H2 + C \qquad (3)$$

Par application de ladite observation, une partie du gaz carbonique éliminé du gaz de synthèse par lavage au solvant, est préférentiellement recyclée à l'entrée du réformage primaire à la vapeur, par mélange avec la fraction de la matière première destinée à subir cette réaction. Le recyclage de ladite quantité de CO2 peut être obtenu soit par détente du solvant à une pression inférieure à celle du lavage du gaz puis compression du gaz ainsi dégagé, soit par désorption de ladite quantité de CO2 par contact à contrecourant avec la fraction de la matière première destinée au réformage primaire, dans une colonne de désorption contenant des plateaux ou des garnissages.

La quantité importante d'azote qui est séparée de l'hydrogène dans l'étape de séparation cryogénique, emporte avec elle la totalité du méthane présent dans le gaz de synthèse, et une très grande partie de l'argon. L'argon résiduaire contenu dans le gaz de synthèse ayant la composition stoechiométrique, après la séparation cryogénique, pourra ensuite être éliminé de la boucle de synthèse d'ammoniac soit par dissolution dans l'ammoniac liquide, à condition de laisser la pression partielle de l'argon dans ladite boucle s'élever à un niveau suffisant, soit par une petite purge de gaz pratiquée sur ladite boucle. Dans ce dernier cas, ladite purge est d'abord refroidie pour condenser la quasi totalité de l'ammoniac qu'elle contient, puis de préférence recyclée dans le gaz de synthèse brut en un point quelconque en amont de la séparation cryogénique, afin de valoriser l'hydrogène qu'elle contient, tout en éliminant l'argon dans ladite séparation cryogénique.

Une description détaillée du procédé de la présente invention est donnée ci-dessous, sous ses formes préférentielles, avec référence aux figures 1, 2 et 3, sur lesquelles chaque appareil est repéré par un numéro dont le premier chiffre est celui de la figure correspondante.

La matière première qui arrive par la conduite 101, est supposée désulfurée et disponible à une pression au moins égale à 30 bars environ, ladite pression devant être suffisante pour produire le gaz final de synthèse, à la sortie de la séparation cryogénique, au niveau de pression désiré, sans aucune compression intermédiaire. En général, la matière première dans la conduit 101 sera à une température supérieure à la température ambiante, du fait qu'elle proviendra soit de l'unité de désulfuration à chaud sur un catalyseur à base d'oxyde de zinc, soit du refoulement d'un compresseur.

La matière première circule ensuite de bas enhaut dans le saturateur 102, à contrecourant d'une partie de l'eau chaude provenant du désurchauffeur 133. Le saturateur 102 est une colonne remplie de garnissages, comme les anneaux pall par exemple, ou de plateaux, ou de n'importe quels dispositifs de contact gaz-liquide. La matière première sort en tête de la colonne 102 saturée de vapeur d'eau, à une température comprise entre 160 et 270°C environ, puis est partagée en deux fractions. La première fraction, circulant dans la conduite 103, représente moins que 70 pour cent de la matière première totale, et au minimum 5 pour cent de celle-ci. Ladite première fraction est ensuite mélangée à la quantité de gaz riche en CO2 et hydrogène obtenu par détente du solvant utilisé pour l'élimination du CO2 du gaz de synthèse; ledit gaz riche en CO2 arrive par les conduites 105 et 207, après avoir été comprimé dans le compresseur 206. Le mélange ainsi obtenu est ensuite préchauffé une première fois dans l'échangeur 106, par échange avec une partie du gaz de synthèse sortant du réacteur de conversion 129, puis ensuite mélangé à une certaine quantité de vapeur venant du ballon de chaudière 126 par la conduite 108, puis le mélange est préchauffé une seconde fois dans l'échangeur 109, par échange avec le gaz de synthèse sortant du réformage à l'air 124. Le mélange préchauffé dans la conduite 110 est alors à une température supérieure à 350°C et de préférence supérieure à 400°C. La quantité de vapeur d'eau totale contenue dans le mélange ainsi obtenu dans la conduite 110 correspond à un rapport de vapeur/carbone compris de préférence entre 1.0 et 3.0, et en tout cas aussi bas que possible, ledit rapport étant le nombre de molécules H2O par atome de carbone des hydrocarbures contenus dans ledit mélange.

Dans une autre représentation de la présente invention, la première fraction de la matière première est aussi mélangée, en un point quelconque allant de la conduite 103 à la conduite 110, avec une fraction du gaz de synthèse produit en aval du réacteur de conversion 132, ou avec la purge de la boucle de synthèse d'ammoniac venant par la conduite 327.

Le mélange gazeux, contenant la première fraction de la matière première, entre ensuite par le haut dans une multitude de tubes parallèles contenus dans la zone de radiation du four de réformage primaire 119, lédits tubes

étant remplis d'un ou plusieurs des catalyseurs à base de nickel habituellement utilisés pour le réformage à la vapeur. La réaction fortement endothermique qui se produit au contact du catalyseur de réformage donne un mélange gazeux contenant H2, CO, CO2, H2O et CH4, tous les autres hydrocarbures éventuellement présents dans la matière première ayant pratiquement disparu dans la réaction. La chaleur nécessaire à cette réaction est transmise à travers la paroi des tubes de catalyseur, à l'aide des brûleurs disposés dans la zone de radiation du four de réformage 119, par combustion d'une fraction ou de la totalité du gaz résiduaire obtenu dans la séparation cryogénique par la conduite 229, et l'appoint éventuel de chaleur étant apporté par une autre source de combustible. Le mélange gazeux sortant des tubes de catalyseur 111 est à une température comprise entre 680 et 820°C, et de préférence entre 720 et 780°C, et contient une teneur en méthane supérieure à 10 pour cent, et de préférence supérieure à 15 pour cent, sur la base du gaz sec.

Compte tenu de la température modérée à la sortie des tubes de réformage primaire 111, et de la perte de charge depuis la conduite 101, la pression à la sortie desdits tubes de réformage sera d'au moins 25 bars, et de préférence d'au moins 40 bars, tout en utilisant pour les tubes des alliages réfractaires connus présentement et utilisés industriellement. En fait, ces alliages permettent d'avoir à la sortie des tubes de réformage de la présente invention une pression pouvant aller jusqu'à 120 bars environ.

La seconde fraction de la matière première, circulant dans la conduite 104, est préchauffée une première fois dans l'échangeur 113, par échange avec une partie du gaz de synthèse sortant du réacteur de conversion 129, puis une seconde fois dans l'échangeur 114, par échange avec une partie du gaz de synthèse venant du réacteur de réformage secondaire 124, pour être ainsi portée à une température supérieure à 350°C, et de préférence supérieure à 400°C. La seconde fraction préchauffée arrivant par la conduite 115 est ensuite mélangée au gaz sortant des tubes de réformage dans la conduite 112; et le mélange ainsi obtenu, qui constitue la charge du réacteur secondaire 124, est injecté dans la zone de mélange 122 dudit réacteur secondaire, de préférence tangentiellement aux parois intérieures de ladite zone de mélange. Ledit mélange est alors à une température minimale de 550°C, et de préférence 650°C, et contient une teneur en équivalent de méthane d'au moins 25 pour cent, et de préférence 35 pour cent, sur gaz sec. L'expression "pourcentage d'équivalent de méthane" utilisée ici désigne le pourcentage en molécules d'hydrocarbures sur gaz sec, exprimé sous forme de méthane, c'est à dire que 5% d'éthane correspondent à 10% d'équivalent de méthane.

L'air de procédé est comprimé dans le compresseur 116, comportant plusieurs étages de compression avec des réfrigérants intermédiaires, jusqu'à un niveau de pression suffisant pour arriver au réacteur de réformage secondaire. L'air comprimé n'est pas refroidi après le dernier étage de compression et arrive par la conduite 117, à une température comprise entre environ 100°C et environ 180°C, au bas du saturateur 118 dans lequel il circule de bas en haut, à contrecourant d'une partie de l'eau chaude provenant du désurchauffeur 133 à l'aide de la pompe 134. Le saturateur 118 est une colonne remplie de garnissages, comme par exemple les anneaux pall, ou de plateaux, ou de n'importante quels dispositifs de contact gaz-liquide. L'air saturé de vapeur d'eau sort en tête de la colonne 118 à une température comprise entre 160 et 270°C environ, puis est préchauffé dans le faisceau 120 placé dans la zone de convection du four de réformage primaire 119, jusqu'à une température supérieure à 400°C, et de préférence supérieure à 500°C. Si nécessaire, des brûleurs supplémentaires peuvent être disposés dans la zone de convection du four 119 pour assurer la préchauffe de l'air de procédé. Celui-ci arrive ensuite par la conduite 121 dans la zone de mélange 122 du réacteur de réformage secondaire. Ladite zone de mélange 122 est de préférence conçue comme celle décrite dans EP—A—0001946, et l'appareil mélangeur utilisé dans la présente invention pour mélanger les gaz réactionnels entrant dans le réacteur 124 est de préférence celui décrit dans ladite demande de brevet euroéen. Néanmoins, d'autres dispositifs de mélange des gaz réactionnels peuvent être utilisés dans le cadre de la présente invention.

Tout l'air destiné à la réaction de réformage secondaire est injecté en une seule fois dans la zone de mélange 122 du réacteur 124. Celui-ci contient, en aval de la zone de mélange 122, une zone de réaction contenant un seul lit de catalyseur 123, ledit lit pouvant néanmoins contenir plusieurs couches de catalyseurs. Le réacteur secondaire 124, y compris la zone de mélange 122, sont constitués d'une enveloppe métallique supportant la pression, et revêtue intérieurement d'une ou plusieurs couches de matériaux réfractaires conçus pour supporter les températures élevées qui règnent dans le réacteur. Le contact de l'air avec la charge du réacteur secondaire initie instantanément la réaction d'oxydation partielle et élève sensiblement la température des gaz réactionnels. La réaction globale exothermique qui se produit adiabatiquement dans le réacteur 124, convertit une très grande partie des hydrocarbures présents dans ladite charge en un mélange contenant H2, CO, CO2 et H2O, et laisse dans le gaz sortant dudit réacteur un pourcentage de méthane inférieur au dixième du pourcentage d'équivalent de méthane contenu dans la charge du réacteur secondaire, sur la base du gaz sec. En tout état de cause, la teneur en

méthane à la sortie du réacteur de réformage secondaire est inférieure à 6 pour cent, et de préférence inférieure à 4 pour cent, sur la base du gaz sec. La température de sortie dudit réacteur est comprise entre 850°C et 1100°C, et de préférence entre 930 et 1000°C. Le ou les catalyseurs utilisés dans ledit réacteur sont les mêmes que ceux habituellement utilisés pour le réformage secondaire à l'air, et qui contiennent essentiellement du nickel sur un support réfractaire.

Le gaz sortant du réacteur secondaire 124 est refroidi d'abord dans la chaudière de récupération 125, puis dans le surchauffeur de vapeur 143, puis dans les préchauffeurs de matière première 109 et 114 placés en parallèle. L'eau destinée à la production de vapeur arrive par la conduite 136, à une température comprise entre 100 et 140°C environ et sous la pression nécessaire à la production de vapeur; la pression dans le ballon de vapeur 126 est supérieure à 40 bars, et de préférence supérieure à 80 bars. L'eau de chaudière est préchauffée une première fois dans l'échangeur 135, par échange avec le gaz de synthèse sortant du désurchauffeur 133, puis préchauffée une seconde fois dans l'échangeur 130, dans lequel une vaporisation partielle peut se produire, par échange avec une partie du gaz de synthèse sortant du réacteur de conversion 129. Entre le ballon de vapeur 126 et la chaudière de récupération 125, l'eau circule soit naturellement, comme représenté sur la Fig. 1, soit à l'aide d'une pompe de circulation. La vapeur saturée produite au même niveau de pression dans la chaudière de récupération 309 de la boucle de synthèse d'ammoniac arrive par la conduite 128 et se mélange à celle produite dans le ballon de vapeur 126, puis on prélève du mélange ainsi formé la quantité nécessaire à la réaction de réformage primaire par la conduite 108, et le reste est surchauffé dans le surchauffeur de vapeur 143 pour servir à l'entraînement des compresseurs 116 et 302.

Dans une autre représentation de la présente invention, la totalité de la vapeur saturée produite à haute pression est surchauffée pour entraîner les compresseurs 116 et 302, et la quantité de vapeur nécessaire au réformage primaire est soutirée à un niveau de pression inférieur de l'une des turbines d'entraînement de ces machines.

Le gaz de synthèse produit dans le réacteur de réformage secondaire 124, après refroidissement dans les échangeurs 109 et 114, subit ensuite une injection d'eau, arrivant par la conduite 127, pour augmenter sa teneur en vapeur d'eau en vue de la réaction de conversion du CO, et pour amener sa température à un niveau compris entre 340 et 400°C pour entrer dans le réacteur de conversion 129. Celui-ci contient le catalyseur habituel de conversion à haute température, constitué essentiellement d'oxyde de fer et d'oxyde de chrome. La réaction exothermique qui se produit adiabatiquement dans le réacteur 129, que l'on peut représenter par l'équation

$$CO + H2O \rightarrow CO2 + H2$$

élève la température du gaz de synthèse à un niveau compris entre 420 et 520°C environ, et réduit la teneur en CO dudit gaz à environ 2 à 4 pour cent sur la base du gaz sec. La récupération de chaleur sur le gaz sortant du réacteur 129 est réalisée sur les échangeurs 106, 113 et 130, qui sont disposés en parallèle pour bénéficier du niveau de température élevée dudit gaz.

Le mélange de gaz de synthèse sortant des échangeurs 106, 113, 130 arrive par la conduite 131 au réacteur de conversion 132, à une température comprise entre 200 et 240°C environ. Le choix de la température d'entrée au réacteur 132 doit être fait en gardant à l'esprit le risque de condensation de la vapeur d'eau dans ledit réacteur; pour cette raison, la température d'entrée au réacteur de conversion 132 doit être de préférence de quelques degrés au dessus du point de rosée du gaz; pour cette même raison il est préférable d'éviter de refroidir le gaz sortant du réacteur 129 à l'aide d'injection d'eau, mais uniquement par échange indirect de chaleur, comme représenté sur la Fig. 1. Le réacteur de conversion 132 contient le catalyseur de conversion à basse température habituellement utilisé dans l'industrie, ledit catalyseur étant constitué essentiellement d'oxyde de zinc, d'oxyde de cuivre et d'alumine. La réaction faiblement exothermique qui se produit adiabatiquement au contact du catalyseur dans le réacteur 132 augmente la température du gaz d'environ 10 à 30°C environ; la teneur en CO du gaz de synthèse qui en sort est inférieure à 0.8 pour cent sur la base du gaz sec, et de préférence inférieure à 0.6 pour cent.

La manière préférentielle de récupérer la chaleur contenue dans le gaz sortant du réacteur de conversion 132 consiste à utiliser autant que possible ladite chaleur pour chauffer un certain débit d'eau par contact direct à contrecourant dans le désurchauffeur 133; ce dernier est une colonne remplie de garnissages, comme les anneaux pall par exemple, ou de plateaux, ou de n'importe quels dispositifs de contact gaz-liquide. L'eau chaude collectée au bas de la colonne 133, à une température comprise entre 180 et 240°C environ, est ensuite pompée à travers la pompe 134, puis partagée en deux fractions, dont l'une est injectée en tête du saturateur 102 et l'autre en tête du saturateur 118, comme indiqué ci-dessus. L'eau refroidie collectée au bas de ces deux saturateurs est ensuite envoyée en tête du désurchauffeur 133, soit par la pression différentielle entre ces colonnes, comme indiqué sur la Fig. 1, soit à l'aide d'une pompe. Le système de saturateur-désurchauffeur

permet ainsi de transférer de le vapeur, à un niveau élevé de pression, du gaz de synthèse vers l'air de procédé et la matière première, en utilisant des calories à bas niveau du gaz de synthèse. Le gaz sortant en tête du désurchauffeur 133 est ensuite refroidi dans l'échangeur 135 pour préchauffer l'eau de chaudière, puis dans un réfrigérant à eau jusqu'au voisinage de la température ambiante, et l'eau ainsi condensée est séparée dans le séparateur 138. Eventuellement, une partie de la chaleur disponible dans le gaz en amont du réfrigérant 137 peut être récupérée pour fournir la chaleur à un système de réfrigération par absorption, dans un échangeur 142 placé en aval de l'échangeur 135 et en amont du réfrigérant 137. Si le gaz de synthèse est destiné à être lavé à l'aide d'un solvant physique à une température inférieure à l'ambiante en vue de l'élimination du CO2, comme cela est le cas sur les Fig. 1 et Fig. 2, alors ledit gaz est réfrigéré dans l'échangeur 139 à une température légèrement au dessus de 0°C à l'aide d'un fluide frigorigène tel que l'ammoniac, afin de condenser au maximum la vapeur qu'il contient à la sortie du séparateur 138, et le condensat est séparé dans le séparateur 140.

Le gaz de synthèse doit ensuite être traité pour éliminer la quasi totalité du gaz carbonique qu'il contient. Pour cette étape de décarbonatation, plusieurs moyens peuvent être utilisés dans le cadre de la présente invention. On peut par exemple utiliser un lavage à l'aide d'un solvant chimique tel que l'éthanolamine, le carbonate de potasse chaud, ou la diglycolamine. Néanmoins, le moyen préférentiel pour le procédé de la présente invention consiste à utiliser un lavage à l'aide d'un solvant physique tel que le méthanol, le carbonate de propylène, ou l'éther diméthylé du polyéthylène glycol, afin de profiter de la pression partielle élevée du CO2 dans le gaz de synthèse et de réaliser un gain d'énergie.

Le schéma représenté par la Fig. 2 est basé sur l'utilisation d'un solvant physique fonctionnant à une température inférieure à la température ambiante. Le gaz de synthèse sortant du séparateur 140 par la conduite 141 arrive au bas de la colonne de lavage 201, dans laquelle il circule à contrecourant du solvant et en contact direct avec celui-ci. La colonne 201 est remplie de garnissages, comme les anneaux pall par exemple, ou de plateaux, ou de n'importe quels dispositifs de contact gaz-liquide. Le solvant chargé de CO2 est soutiré au fond de la colonne 201, puis détendu partiellement dans la turbine 202, afin d'en libérer un gaz contenant une grande partie de l'hydrogène dissout; ledit gaz est séparé dans le séparateur 203, puis comprimé dans le compresseur 206, pour être recyclé en un point quelconque du procédé en amont de la colonne 201, et de préférence mélangé à la première fraction de la matière première par les conduites 207 et 105. Le solvant sortant du séparateur 203 est ensuite refroidi dans le réfrigérant 204, par vaporisation d'un liquide frigorigène approprié, puis détendu une seconde fois avant d'arriver au séparateur 208; cette seconde détente peut être réalisée soit à travers une vanne, comme symbolisé sur la Fig. 2, soit à travers une seconde turbine de détente, afin de récupérer davantage l'énergie de pompage. Le solvant est ensuite injecté, par simple pression différentielle, en tête de la colonne de régénération 210, dans laquelle il circule à contrecourant d'un gaz de régénération tel que l'air, l'azote ou la vapeur d'eau, et en contact directe avec ledit gaz. La régénération par l'air est toutefois le moyen préférentiel dans le procédé de la présente invention: l'air de régénération est aspiré par la conduite 214, puis comprimé dans le ventilateur 215, pour être refoulé au bas de la colonne 210, qui fonctionne à une pression très voisine de la pression atmosphérique. La colonne de régénération 210 est remplie de garnissages, comme les anneaux pall par exemple, ou de plateaux, ou de n'importe quel dispositif de contact gaz-liquide. Le gaz libéré dans le séparateur 208 est très riche en CO2 et peut être utilisé par exemple pour la synthèse de l'urée; néanmoins, si l'on veut récupérer une plus grande partie du CO2 total contenu dans le gaz de synthèse, on peut utiliser pour certains solvents de la vapeur d'eau pour régénérer le solvant sous une pression très sensiblement inférieure à la pression atmosphérique dans la colonne 210, afin d'obtenir en tête de celle-ci, dans la conduite 211, un gaz riche en CO2 convenant pour la synthèse de l'urée. Le solvant régénéré est ensuite soutiré du fond de la colonne 210, puis pompé à haute pression à travers la pompe 213 et injecté en tête de la colonne 201. L'énergie récupérée par la turbine 202 sert à entraîner la pompe 213, par couplage sur la même arbre, l'appoint d'énergie nécessaire étant fourni par une autre machine.

Le gaz de synthèse lavé, sortant de la colonne 201 par la conduite 216, contient une teneur résiduaire en CO2 inférieure à 0.15 mole pour cent, et de préférence inférieure à 0.05 mole pour cent, sur la base du gaz sec. Ledit gaz est ensuite préchauffé dans l'échangeur 217, par échange avec le gaz sortant du réacteur de méthanation 219, puis éventuellement préchauffé dans l'échangeur 218 dans le cas où la chaleur apportée par l'échangeur 217 n'est pas suffisante, pour atteindre enfin une température de l'ordre de 250 à 350°C, avant d'entrer dans le réacteur de méthanation 219. Celui-ci contient le catalyseur habituel de méthanation utilisé industriellement, constitué essentiellement de nickel sur un support réfractaire. La réaction exothermique qui se produit adiabatiquement au contact du catalyseur transforme la quasi totalité des oxydes du carbone contenus dans le gaz en méthane. L'accroissement de température à travers le réacteur 219 est de l'ordre de 25 à 50°C, et

peut être suffisant pour préchauffer le gaz de synthèse entrant audit réacteur à la température nécessaire dans l'échangeur 217; si un appoint de préchauffe est nécessaire dans l'échangeur 218, la chaleur y sera apportée soit par les fumées du four de réformage primaire 119, soit par le gaz de synthèse sortant du réacteur de conversion 129, soit par la gaz de synthèse sortant des échangeurs 109 et 114. Le gaz sortant du réacteur de méthanation 219 est d'abord refroidi dans l'échangeur 217, par échange avec le gaz entrant audit réacteur, puis dans le réfrigérant 220 à l'aide d'un fluide frigorigène tel que l'ammoniac. L'eau ainsi condensée est séparée du gaz dans le séparateur 221, et le gaz est ensuite séché dans l'un des sécheurs 222 ou 228, contenant tous les deux soit de la silice activée, soit de l'alumine activée, soit des tamis moléculaires. Les sécheurs 222 et 228 sont conçus comme habituellement dans l'industrie, c'est à dire que l'un des sécheurs est en opération pendant que l'autre est en régénération. La régénération est réalisée en prélevant une fraction du gaz résiduaire sortant du fond de la colonne 224, et en préchauffant ladite fraction dans l'échangeur 227, par échange avec la vapeur, ou par apport d'énergie électrique.

Le gaz de synthèse sec contient à ce stade un rapport moléculaire H2/N2 inférieur à 2.4, et de préférence inférieur à 2.0; la séparation cryogénique qu'il doit subir ensuite a pour objet de séparer l'excès d'azote pour produire un gaz de synthèse ayant un rapport moléculaire H2/N2 pratiquement égal à 3.0. Le gaz sortant du sécheur 222 est refroidi dans l'échangeur 223 jusqu'à une température voisine de −180°C, et en tous cas comprise entre −170 et −195°C, par échange avec les gaz sortant de la colonne 224; une partie importante de l'azote contenue dans le gaz est ainsi condensée, ainsi que la quasi totalité du méthane. Le gaz de synthèse ainsi que le liquide formé entrent au bas de la colonne de séparation cryogénique 224, qui fonctionne comme une colonne de distillation, et qui est remplie de garnissages, comme les anneaux pall par exemple, ou de plateaux, ou de n'importe quels dispositifs de contact gaz-liquide. Le liquide soutiré au fond de la colonne 224 est détendu à travers une vanne à une faible pression, inférieure à 6 bars absolus, puis envoyé dans le côté calandre de l'échangeur 225 placé en tête de ladite colonne, pour vaporiser tout le liquide à cette basse pression et fournir par condensation d'une partie du gaz de tête de cette colonne le reflux nécessaire à la séparation. Une des caractéristiques essentielles de la présente invention est que les besoins nets de réfrigération dans la séparation cryogénique sont entièrement fournis par la détente d'une partie ou de la totalité du liquide soutiré au fond de la colonne 224 à une pression inférieure à 6 bars absolus; pour y arriver, le rapport moléculaire H2/N2 du gaz entrant à ladite séparation doit être inférieur à 2.4, et de préférence inférieur à 2.0. Le gaz de synthèse sortant en tête de la colonne 224, ainsi que le gaz résiduaire produit par vaporisation dans l'échangeur 225, sont séparément réchauffés dans l'échangeur 223, par échange avec le gaz entrant à la séparation cryogénique. Le gaz résiduaire ainsi obtenu dans la conduite 229 contient la quasi totalité du méthane, ainsi que la plus grande partie de l'argon, contenus dans le gaz de synthèse sortant des sécheurs 222 ou 228. Ledit gaz résiduaire est utilisé de préférence comme combustible dans le four de réformage primaire 119, dont il fournit la plus grande partie ou même la totalité des besoins en combustible. Une partie dudit gaz résiduaire, avant d'être utilisée comme combustible, est utilisée pour régénérer les sécheurs 222 et 228 alternativement, comme indiqué ci-dessus.

Dans une autre représentation de la présente invention, une partie seulement du liquide au fond de la colonne 224 est détendue et vaporisée dans le condenseur de reflux 225, alors que l'autre partie est vaporisée sans détente dans l'échangeur 223, puis ensuite détendue à basse pression dans une turbine pour en récupérer l'énergie, puis ensuite mélangée avec l'autre fraction du gaz résiduaire pour être utilisée comme combustible.

Dans une autre représentation de la présente invention, les sécheurs 222 et 228 sont supprimés, et l'echangeur 223 est dédoublé pour fonctionner en alternance: pendant que l'un des échangeurs 223 est en service, avec dépôt sur la paroi de glace provenant de la vapeur d'eau résiduaire du gaz, l'autre échangeur 223 est régénéré pour en extraire la glace par vaporisation au contact du gaz résiduaire provenant de l'échangeur 225, et destiné à être ensuite utilisé comme combustible.

Le gaz de synthèse final sortant par la conduite 230 contient seulement quelques ppm d'oxydes du carbone, quelques dizaines de ppm de méthane, et une teneur en argon inférieure à 0.3 mole pour cent, et de préférence inférieure à 0.2 mole pour cent; de plus, ledit gaz de synthèse a un rapport moléculaire H2/N2 pratiquement égal à 3.0. Ledit gaz de synthèse final, compte tenu de la perte de charge depuis le réformage primaire à la vapeur, est alors disponible à une pression d'au moins égale à 23 bars, et de préférence d'au moins 38 bars. Il arrive ensuite par la conduite 301 à l'aspiration du compresseur 302 pour être porté à la pression de la boucle de synthèse d'ammoniac, qui est en général comprise entre 140 et 340 bars pour les unités de grande capacité. Le compresseur 302 peut avoir un ou plusieurs étages de compression; néanmoins, compte tenu de la pression élevée à laquelle est produit le gaz de synthèse final dans la conduite 301, le compresseur 302 aura au maximum deux étages de compression pour un compresseur alternatif, et deux corps pour un compresseur centrifuge.

Le gaz de synthèse sortant du compresseur

302 est refroidi dans le réfrigérant 303 à une température très voisine de la température ambiante, puis mélangé au gaz de recyclage de la boucle de synthèse arrivant par la conduite 304 à une température légèrement inférieure à la température ambiante. Le mélange ainsi obtenu est alors comprimé dans le compresseur de recyclage 305, dont la pression différentielle est égale à la perte de charge totale de la boucle de synthèse. Le gaz sortant du compresseur 305 contient une teneur moléculaire en ammoniac comprise entre 2 et 7 pour cent environ, et une teneur moléculaire en argon inférieure à 15 pour cent environ, et de préférence inférieure à 10 pour cent environ; ledit gaz est préchauffé dans l'échangeur 306, par échange avec le gaz venant du réacteur de synthèse 307, puis injecté dans ledit réacteur en différentes positions, à une température comprise entre 180 et 300°C environ, comme généralement pratiqué dans l'industrie de l'ammoniac. Le réacteur de synthèse 307 est conçu comme ceux utilisés présentement dans l'industrie de l'ammoniac, et contient le catalyseur habituellement utilisé pour la synthèse de l'ammoniac, constitué essentiellement d'oxyde magnétique de fer réduit par l'hydrogène de la boucle de synthèse. Au contact du catalyseur, une partie de l'hydrogène et de l'azote réagissent pour former de l'ammoniac. La chaleur de la réaction exothermique fait monter la température du mélange réactionnel à un niveau comprise entre 400 et 500°C environ. Le réacteur de synthèse 307 est équipé d'une résistance éléctrique intérieure, ou d'un four de démarrage extérieur, pour la mise en température du catalyseur.

La chaleur contenue dans le gaz sortant du réacteur 307 par la conduite 308 est récupérée d'abord dans la chaudière de récupération 309, pour produire de la vapeur à haute pression, puis dans le préchauffeur d'eau de chaudière 310, puis dans le préchauffeur 306 par échange avec le gaz de charge du réacteur 307. Le gaz est ensuite refroidi, d'abord dans un réfrigérant à eau 311, puis dans l'échangeur 312 par échange avec le gaz de recyclage de la boucle arrivant par la conduite 317, puis dans le réfrigérant 313 par échange avec un fluide frigorigène tel que l'ammoniac, jusqu'à une température comprise entre 2 et 12°C environ, afin de condenser au maximum l'ammoniac produit par la réaction. L'ammoniac ainsi condensé est ensuite séparé dans le séparateur 316, et le gaz sortant de ce dernier est ensuite préchauffé dans l'échangeur 312, puis recyclé vers le compresseur de recyclage 305, comme indiqué ci-dessus. Une très faible partie du gaz sortant du séparateur 316, dite purge haute pression, peut être prélevée de la boucle, par la conduite 326, pour être détendue à une pression légèrement supérieure à celle de l'aspiration du compresseur 302, puis refroidie à une température inférieure à —15°C environ dans le réfrigérant 323, par échange avec un fluide frigorigène tel que l'ammoniac, afin de récupérer au mieux l'ammoniac qu'elle contient, puis recyclée en un point quelconque du procédé, en amont de la séparation cryogénique, c'est à dire mélangée avec le gaz de synthèse brut en un point quelconque de la chaîne de production en amont de l'échangeur 223. Ce recyclage permet ainsi de séparer l'argon contenu dans ladite purge haute pression, et de valoriser l'hydrogène qu'elle contient.

L'ammoniac liquide soutiré du séparateur 316 est détendu à une pression légèrement supérieure à celle de l'aspiration du compresseur 302, et le gaz libéré par cette détente est séparé du liquide dans le séparateur 321, puis refroidi à une température inférieure à —15°C environ dans le réfrigérant 323, par échange avec un fluide frigorigène tel que l'ammoniac, de préférence conjointement avec la purge haute pression prélevée par la conduite 326. Le gaz sortant du réfrigérant 323 et provenant de la détente de l'ammoniac liquide dans le séparateur 321 est aussi recyclé en un point quelconque du procédé, c'est à dire mélangé avec le gaz de synthèse brut en un point quelconque de la chaîne de production, en amont de la séparation cryogénique. L'ammoniac liquide sortant du séparateur 321 est ensuite détendu pour aller au stockage ou vers les consommateurs en aval, pour la production d'engrais par exemple.

On peut ainsi remarquer que l'argon contenu dans le gaz de synthèse final à l'aspiration du compresseur 302 peut être éliminé de la boucle de synthèse de deux manières différentes; une première manière consiste à laisser la pression partielle de l'argon dans la boucle monter jusqu'à un niveau tel que la solubilité de l'argon dans l'ammoniac liquide, dans le séparateur 316, élimine tout l'argon introduit dans la boucle, la purge haute pression étant nulle dans ce cas. La seconde manière consiste à pratiquer une purge haute pression par la conduite 326, afin d'éliminer une partie seulement de l'argon introduit dans la boucle, l'autre étant éliminée par solubilité dans l'ammoniac liquide dans le séparateur 316. Le choix entre ces deux manières de procéder est une question d'optimisation économique. Dans les deux cas, l'argon soutiré de la boucle de synthèse est ensuite éliminé dans la séparation cryogénique, par l'effet du recyclage sus-mentionné, ladite séparation agissant ainsi comme un barrage pour l'argon.

L'ammoniac est de préférence utilisé comme fluide frigorigène dans les échangeurs 204, 313 et 323. Il est préférable d'utiliser un système de réfrigération par absorption pour les échangeurs 204 et 313, car la chaleur que l'on peut récupérer dans l'échangeur 142 peut en général suffire pour les besoins d'un tel système, les niveaux de température dans les échangeurs 204 et 313 étant très voisins, sinon identiques.

Il ressort de la description générale ci-dessus

que la quantité d'air en excès introduite au réformage secondaire 123 est telle que l'on obtienne à la sortie du réacteur de méthanation 219 un rapport moléculaire H2/N2 inférieur à 2.4. Cela revient à dire que la quantité d'azote contenue dans le gaz sortant du réacteur de réformage secondaire 124 est sensiblement supérieure à celle qui serait nécessaire pour convertir en ammoniac tout l'hydrogène potentiel contenu dans ledit gaz; par définition, l'hydrogène potentiel dans ledit gaz est égal à la quantité d'hydrogène qui restera dans le gaz de synthèse après les étapes de conversion du CO, d'elimination du CO2, et de méthanation. Cette quantité d'hydrogène est calculable à partir de la somme (H2 + CO) contenue dans le gaz sortant du réformage secondaire 124, dont on retranche les pertes subies en aval, à savoir la perte correspondant au CO résiduaire à la sortie du réacteur de conversion 132, la perte dans la colonne 201 par solubilité dans le solvant, et les pertes dues à la méthanation du CO et du CO2 dans le réacteur 219. Ainsi, compte tenu de ces pertes diverses en hydrogène, et en faisant abstraction des recyclages éventuels de gaz de synthèse de l'aval vers l'amont du procédé, on peut dire que pour obtenir à la sortie du réacteur de méthanation 219 un rapport moléculaire H2/N2 inférieure à 2.4, la quantité d'azote contenue dans le gaz de synthèse brut sortant du réformage secondaire 124 doit être supérieure d'au moins 25 pour cent par rapport à celle nécessaire pour convertir en ammoniac tout l'hydrogène potentiel dans ledit gaz de synthèse brut.

La description général ci-dessus met en jeu des réactions catalytiques qui sont toutes pratiquées industriellement, bien que le niveau de pression soit en général inférieur dans l'industrie à celui préféré pour la présente invention. Il convient de noter que dans toutes les réactions catalytiques de la présente invention, la composition chimique, la structure physique et la méthode de fabrication des catalyseurs utilisés ne font pas partie de la présente invention.

Un exemple d'application de la présente invention est donné ci-dessous, basé sur une charge de gaz naturel supposée contenir uniquement du méthane. Toutes les quantités de matières sont ici exprimées en kg-moles/heure. Le méthane total dans la conduite 101 est à 120°C et sous une pression de 73.8 bars abs., et contient 1425.50 moles CH4. A la sortie de la colonne 102 à 201°C le méthane contient 404.70 moles H2O. La première fraction de la matière première, dans la conduite 103, contient 427.65 moles CH4, soit 30 pour cent du total, et la seconde fraction dans la conduite 104 contient 997.85 moles CH4. Le gaz recyclé par la conduite 105 contient 38.16 moles H2, 27.27 moles N2 et 427.65 moles CO2. On ajoute à la première fraction 733.90 moles H2O par la conduite 108, et on préchauffe le mélange à 500°C à la sortie de l'échangeur 109. La seconde fraction du méthane est préchauffée à 632°C dans l'échangeur 114. L'air de procédé dans la conduite 117 est à 72.5 bars et 150°C, et contient 2589.57 moles N2, 694.80 moles O2, 30.99 moles d'argon, et 3.31 moles CO2. Après passage dans la colonne 118, l'air en sort à 200°C, et contient 942.23 moles H2O. L'eau chaude entre dans les colonnes 102 et 118 à 203°C, et en sort à 160°C; le débit d'eau est de 12793 moles H2O à l'entrée de la colonne 118 et de 6401 moles H2O à l'entrée de la colonne 102. Le débit d'eau à l'entrée de la colonne 133 est de 17847 moles H2O.

Le gaz sortant des tubes de réformage primaire 111 est à 760°C, et sous une pression de 70.8 bars, et contient 370.51 moles H2, 157.50 moles CO, 392.61 moles CO2, 305.19 moles CH4, et 767.88 moles H2O. Les tubes du four de réformage primaire 111 contiennent un volume chauffé de 6 m3 du catalyseur habituel de réformage, à base de nickel, et la chaleur absorbée dans la réaction de réformage de ce four est égale à 12.6 MMKcal/heure. L'air de procédé est préchauffé à 720°C dans l'échangeur 120, placé das la zone de convection du four 119. La charge du réacteur secondaire 124 contient 1303.04 moles CH4, soit 57.8 pour cent de CH4 sur la base du gaz sec. Le gaz sortant du réacteur de réformage secondaire 124 est à 960°C et sous une pression de 70.3 bars, et contient 2632.76 moles H2, 1149.77 moles CO, 564.68 moles CO2, 142.01 moles CH4, 2616.84 moles N2, 30.99 moles A, et 2053.21 moles H2O. Le réacteur secondaire 124 contient 23 m3 du catalyseur habituel de réformage secondaire, à base de nickel. Le gaz sortant du réacteur 124 est refroidi dans la chaudière 125, puis dans les échangeurs 143, 109 et 114, puis on injecte par la conduite 127 dans ledit gaz 1689.35 moles d'eau pour amener le gaz à 360°C pour entrer au réacteur de conversion 129; le gaz sort de ce réacteur à 456°C, contenant une teneur en CO de 3.57 pour cent sur la base du gaz sec. Le réacteur de conversion 129 contient 60 m3 du catalyseur habituel de conversion à haute température, à base d'oxydes du fer et du chrome. Le gaz entre au réacteur 132 de conversion à basse température à 210°C, après échange indirect de chaleur dans les échangeurs 106, 113 et 130, et sort dudit réacteur à 235°C sous une pression de 68.7 bars, contenant 3749.61 moles H2, 32.92 moles CO, 1681.53 moles CO2, 142.01 moles CH4, 2616.84 moles N2, 30.99 moles A et 2625.71 moles H2O. Le réacteur de conversion basse température 132 contient 57 m3 du catalyseur habituel de conversion à basse température, à base d'oxyde de cuivre.

Le gaz de synthèse sort du désurchauffeur 133 à 174°C et sous 68.5 bars, puis de l'échangeur 135 à 168°C environ, puis de l'échangeur 142 à 133°C environ, puis du réfrigérant à eau 137 à 38°C. Dans l'échangeur

135, l'eau de chaudière supposée dégazée et sous pression, est préchauffée de 120 à 160°C. Dans le cas où l'eau de chaudière est disponible non dégazée et à la température ambiante, elle sera de préférence préchauffée à 100°C environ en utilisant la chaleur contenue dans le gaz de synthèse sortant de l'échangeur 142 à 133°C. Après le réfrigérant final à l'ammoniac 139, le gaz de synthèse est à 5°C environ et sous 67.7 bars. le solvant utilisé pour la décarbonatation du gaz dans la colonne 201 est l'éther diméthylé du polyéthylène glycol. Le gaz sortant de la colonne 201 est à environ 5°C et contient 3680.79 moles H2, 32.92 moles CO, 3.29 moles CO2, 142.01 moles CH4, 2567.76 moles N2, et 30.99 moles A. Le solvant est détendu à travers la turbine 202 puis arrive dans le ballon 203 à 20 bars environ, où il libère un gaz contenant 38.16 moles H2, 27.27 moles N2 et 427.65 moles CO2, et ce gaz est recyclé, après compression dans le compresseur 206, vers la première fraction du méthane destiné au réformage primaire, à travers la conduite 207. Le solvant soutiré du séparateur 203 est réfrigéré à l'aide de l'ammoniac dans l'échangeur 204, puis détendu à travers une vanne et injecté en tète de la colonne de régénération 210; dans cette colonne, le solvant est régénéré par contact à contrecourant avec de l'air, injecté par le ventilateur 215, la pression dans ladite colonne étant pratiquement la pression atmosphérique. La quantité de réfrigération à fournir à travers l'échangeur 204 résulte d'un bilan thermique global du système de décarbonatation.

Le gaz de synthèse est ensuite préchauffé à 320°C dans l'échangeur 217, puis entre à cette température au réacteur de méthanation 219, et en sort à 360°C; le gaz est ensuite refroidi à 45°C environ dans l'échangeur 217, et il contient à ce stade 3568.87 moles H2, 2567.76 moles N2, 178.22 moles CH4, 30.99 moles A, et moins que 10 ppm en volume de (CO + CO2), et se trouve sous une pression de 66.3 bars. Le réacteur de méthanation 219 contient 20 m3 du catalyseur habituel de méthanation, à base de nickel. Le gaz est ensuite refroidi par l'ammoniac à 5°C dans l'échangeur 220, puis est mélangé au gaz arrivant par la conduite 327, contenant 27.01 moles H2, 9.0 moles N2, 0.14 moles CH4, 2.83 moles A et 0.77 moles NH3; le mélange ainsi obtenu est ensuite séché dans le ballon 222 qui contient de l'alumine activée, ainsi qu'une petite quantité de tamis moléculaires pour arrêter les traces d'ammoniac provenant du recyclage. Le gaz de synthèse final sortant par la conduite 230 à 0°C environ et sous 65.1 bars contient alors 3463.83 moles H2, 1154.61 moles N2, 3.72 moles A, et 0.18 moles CH4. Le gaz résiduaire provenant de la séparation cryogénique par la conduite 229, à une pression de 3 bars, contient 132.05 moles H2, 1422.15 moles N2, 30.10 moles A, 178.18 moles CH4 et 0.77 moles NH3. Le gaz de synthèse final est ensuite comprimé dans le compresseur 302 à une pression de 168 bars, puis mélangé au gaz de recyclage de la boucle de synthèse de la conduite 304, contenant 10472.19 moles H2, 3490.73 moles N2, 869.45 moles NH3, 946.58 moles A, et 22.06 moles CH4; le mélange obtenu ainsi est comprimé dans le compresseur 305 à 183 bars, puis préchauffé à 240°C environ pour être injecté dans le réacteur de synthèse 307, lequel contient 38 m3 du catalyseur habituel de synthèse, à base d'oxyde de fer réduit. Le gaz sort du réacteur 307 à environ 460°C et sous 177 bars, et contient 10506.60 moles H2, 3502.20 moles N2, 3155.73 moles NH3, 950.30 moles A et 22.24 moles CH4. Dans le séparateur 316 à 10°C et sous 170 bars on soutire par la conduite 320 un liquide contenant 2284.90 moles NH3, 19.35 moles H2, 6.45 moles N2, 2.34 moles A et 0.12 moles CH4; la purge haute pression prélevée par la conduite 326 contient 15.06 moles H2, 5.02 moles N2, 1.38 moles A, 1.38 moles NH3 et 0.06 moles CH4. Le gaz libéré dans le séparateur 321 par détente dudit liquide contient 11.95 moles H2, 3.98 moles N2, 1.45 moles A et 0.07 moles CH4; ledit gaz est mélangé à la purge haute pression venant par la conduite 326, et le mélange est refroidi à −29°C dans l'échangeur 323, par échange avec de l'ammoniac, d'où il ressort avec 0.77 moles NH3 seulement pour être recyclé en amont du sécheur 222 comme indiqué ci-dessus. Le liquide soutiré du séparateur 321 contient 2285.51 moles NH3, 7.39 moles H2, 2.46 moles N2, ce qui correspond à une production d'ammoniac de 934.2 tonnes/jour.

La chaleur échangée dans l'échangeur 142, qui est d'environ 9.5 MMKcal/h, est utilisée dans un système de réfrigération par absorption de l'ammoniac dans l'eau, lequel système permet de satisfaire les besoins frigorifiques des échangeurs 313, 204 et 220. La vapeur est produite à 120 bars dans les chaudières 125 et 309, celle-ci produisant 2280 moles de vapeur et celle-là 2860 moles de vapeur environ; après prélèvement de 733.9 moles de vapeur pour le réformage primaire, il reste environ 4406 moles de vapeur que l'on surchauffe à 525°C dans l'échangeur 126, et qui servent à entraîner, à l'aide de turbines à condensation, le compresseur d'air 116, ayant une puissance de 8040 Kw environ, et les compresseurs de gaz de synthèse 302 et 305, ayant une puissance de 9000 Kw environ.

Dans l'exemple ci-dessus, la quantité totale de gaz naturel consommée, soit 1425.50 Kg-moles/heure, représente une consommation de 7.02 MMKcal/tonne d'ammoniac, alors que la quantité excédentaire de gaz résiduaire, disponible pour d'autres usages que le chauffage du four 119, représente 0.25 MMKcal/tonne d'ammoniac; ainsi, la consommation nette de combustible est de 6.77 MMKcal/tonne d'ammoniac, en supposant que l'électricité est utilisée

pour satisfaire les autres besoins tels que: compression du gaz naturel si nécessaire, entraînement des pompes de circulation du solvant utilisé pour la décarbonatation. Même en tenant compte de ces petites consommations d'énergie électrique, la consommation globale d'énergie du procédé de la présente invention est comprise entre 6.9 et 7.2 MMKcal/tonne d'ammoniac, c'est à dire très sensiblement inférieure à celle du procédé habituel, laquelle se situe dans la fourchette de 7.6 à 8.1 MMKcal/tonne d'ammoniac. Par ailleurs, le coût d'investissement d'une usine d'ammoniac réalisée selon l'exemple donnée ci-dessus est inférieur d'environ 15 pour cent à celui du procédé habituel.

L'exemple décrit ci-dessus représente un optimum économique dans le cas où l'on peut utiliser avantageusement le surplus de gaz résiduaire de la conduite 229, après avoir satisfait les besoins en combustible du four de réformage 119. Dans la mise en oeuvre industrielle de la présente invention interviennent plusieurs paramètres, dont les valeurs doivent être choisies en fonction des conditions économiques générales et des contraintes particulières de l'environnement industriel. On choisit en général la pression dans les réformages primaire et secondaire aussi élevée que possible, en fonction de la qualité et de la métallurgie des tubes de réformage primaire, ce qui détermine le nombre de corps du compresseur 302 pour arriver à la pression de la boucle de synthèse, souvent comprise entre 150 et 220 bars, eu égard à la qualité du gaz de synthèse. Le partage de la matière première entre les deux fractions doit tenir compte de la nature des hydrocarbures qu'elle contient: pour un gaz naturel contenant une forte teneur en méthane, la première fraction, destinée au réformage primaire à la vapeur, sera comprise entre 5 et 35 pour cent du total; pour une charge contenant une forte teneur en éthane et propane, la première fraction sera comprise entre 25 et 50 pour cent; pour une charge constituée principalement de butane et de naphta, la première fraction sera comprise entre 50 et 70 pour cent du total. La température de sortie du réformage primaire, ainsi que la température de préchauffe de l'air destiné au réformage secondaire, sont aussi choisies en fonction de la métallurgie des tubes utilisés, et aussi élevées que possible; en choisissant des alliages réfractaires actuellement utilisés industriellement, on peut préchauffer l'air économiquement à une température comprise entre 700 et 750°C, et sortir du four 119 à une température de l'ordre de 750 à 780°C, pour des pressions de 50 à 80 bars.

Une autre considération importante dans la mise en oeuvre de la présente invention est relative au bilan énergétique global; si le coût de l'energie électrique est sensiblement inférieur à celui de l'énergie thermique, on aura intérêt à minimiser l'importance de la première fraction de la matière première, et à utiliser ainsi un excès d'azote important dans le réformage secondaire, conduisant à un rapport moléculaire H2/N2 de l'ordre de 1.0 à 1.6 à l'entrée de la séparation cryogénique, ce qui correspond à un excès d'azote de 87.5 à 200 pour cent par rapport à la quantité nécessaire pour convertir en ammoniac tout l'hydrogène potentiel contenu dans le gaz de synthèse sortant du réacteur secondaire. Néanmoins, on sera obligé dans certains cas de limiter la quantité d'azote en excès à celle permettant d'équilibrer les besoins en combustible du four de réformage 119 avec le débit de gaz résiduaire disponible dans la conduite 229, après séparation cryogénique. Par ailleurs, il peut être préférable dans certains cas de choisir les paramètres de manière à ce que la quantité de vapeur haute pression produite dans les chaudières de récupération ne dépasse pas les besoins internes de l'unité d'ammoniac.

La description ci-dessus du procédé de la présente invention peut être appliquée de différentes manières au cas où l'on veut traiter simultanément deux ou plusieurs matières premières. En effet, on peut soit mélanger ces matières premières au départ, en partie ou en totalité, puis procéder au partage entre les deux fractions comme indiqué ci-dessus, soit en traiter une seule dans le réformage primaire à la vapeur, et injecter les autres directement au réformage secondaire à l'air. Ces différentes combinaisons de matières premières, bien qu'elles n'aient pas fait l'objet d'exemples ci-dessus, entrent néanmoins dans l'esprit de l'invention, dont la base fondamentale est la combinaison des étapes du procédé, laquelle présente les mêmes avantages quels que soient le nombre et la combinaison des matières premières.

Tandis que les représentations particulières de la présente invention ont été décrites ci-dessus, il est bien entendu que l'invention ne s'y trouve pas confinée, et, en conséquence, les revendications suivantes ont pour objet de couvrir toute l'étendue, et de traduire tout l'esprit, de ladite invention.

## Revendications

1. Procédé de production de gaz de synthèse d'ammoniac, qui consiste à soumettre une matière première contenant des hydrocarbures, désulfurée et disponsible à une pression minimum de 30 bars, aux étapes successives de:

— réformage primaire à la vapeur, par addition de vapeur d'eau et chauffage indirect, dans des tubes contenant un catalyseur de réformage produisant ainsi un gaz contenant de l'hydrogène,

— réformage secondaire à l'air en une seule étape, par réaction avec de l'air comprimé, dans un réacteur fonctionnant adiabatiquement, et contenant un seul lit de catalyseur de

réformage, produisant ainsi un gaz de synthèse brut contenant une teneur en azote supérieure à celle qui serait nécessaire pour convertir en ammoniac tout l'hydrogène potentiel contenu dans ledit gaz,

— conversion de la quasi totalité de l'oxyde de carbone dudit gaz de synthèse brut, en gaz carbonique et hydrogène, par action de la vapeur d'eau et en présence d'un ou de plusieurs catalyseurs de conversion,

— élimination de la quasi totalité du gaz carbonique contenu dans le gaz de synthèse issu de l'étape de conversion de l'oxyde de carbone par lavage dudit gaz avec un solvant approprié,

— méthanation des oxydes du carbone par réaction de ceux-ci avec une partie de l'hydrogène contenu dans le gaz, au contact d'un catalyseur de méthanation,

— séparation par cryogénie de l'excès d'azote contenu dans le gaz, conduisant ainsi d'une part, à un gaz de synthèse final ayant pratiquement la composition stoechiométrique nécessaire à la synthèse de l'ammoniac et, d'autre, à un gaz résiduaire riche en azote,

le procédé étant caractérisé

— en ce qu'une partie seulement de la matière première comprise entre 5 et 70% du total, est traitée dans le réformage primaire, le gaz issu de cette étape de réformage primaire ayant une température comprise entre 680°C et 820°C,

— en ce que la partie de matière première n'ayant pas subi le réformage primaire est combinée avec le gaz contenant de l'hydrogène issu du réformage primaire, le mélange ainsi obtenu, qui contient au minimum 25% en équivalent de méthane sur la base du gaz sec, étant soumis au réformage secondaire.

— en ce que le gaz issu du réformage secondaire est à une température comprise entre 850 et 1 100°C et a un pourcentage de méthane inférieur au dixième du pourcentage d'equivalent de méthane contenu dans le mélange constituant la charge dudit réformage secondaire,

— en ce que la quantité d'air mise en jeu dans le réformage secondaire est telle que le rapport moléculaire H2/N2 du gaz issu de l'étape de méthanation, soit inférieur à 2,4, et

— en ce que ladite séparation par cryogénie est réalisée par distillation à une température comprise entre −170 et −195°C.

2. Procédé selon la revendication 1, caractérisé en ce qu'une partie au moins du gaz dégagé par détente partielle du solvant utilisé dans l'étape d'élimination du gaz carbonique est recyclé dans le procédé en un point quelconque en amont dudit réformage secondaire à l'air.

3. Procédé selon la revendication 1 ou 2, caractérisé en ce que la chaleur contenue dans le gaz sortant de l'étape de conversion de l'oxyde de carbone est en partie utilisée pour chauffer de l'eau, et l'eau ainsi chauffée est ensuite utilisée pour saturer de vapeur d'eau au moins une partie de la matière première, par contact direct à contrecourant.

4. Procédé selon l'une quelconque des revendications 1 à 3, caractérisé en ce que la chaleur contenue dans le gaz sortant de l'étape de conversion de l'oxyde de carbone est en partie utilisée pour chauffer de l'eau, et l'eau ainsi chauffée est ensuite utilisée pour saturer de vapeur d'eau l'air comprimé destiné audit réformage secondaire, par contact direct à contrecourant.

5. Procédé de production d'ammoniac à partir du gaz de synthèse obtenu par le procédé conforme à l'une quelconque des revendications 1 à 4, qui consiste à comprimer ce gaz de synthèse, à l'injecter dans un circuit de synthèse produisant de l'ammoniac au contact d'un catalyseur et à soutirer l'ammoniac ainsi produit sous forme liquide, caractérisé en ce que l'ammoniac liquide soutiré du circuit de synthèse est détendu à une pression supérieure à celle dudit gaz de synthèse, le gaz produit par cette détente étant recyclé au moins en partie en un point quelconque en amont de l'étape de séparation par cryogénie du procédé de production du gaz de synthèse.

6. Procédé selon la revendication 5, caractérisé en ce qu'une purge est extraite du circuit de synthèse d'ammoniac, après séparation de l'ammoniac liquide, puis détendue à une pression supérieure à celle dudit gaz de synthèse et enfin au moins partiellement recyclée en un point quelconque en amont de l'étape de séparation par cryogénie du procédé de production du gaz de synthèse.

## Claims

1. Process for the production of ammonia synthesis gas, in which a desulfurized hydrocarbon containing feedstock available at a pressure of at least 30 bars is subjected to the following steps:

— primary steam reforming, with addition of steam and indirect heating, into tubes containing a reforming catalyst, thus producing a gas including hydrogen,

— secondary air reforming in a single step, by reacting with compressed air, in a reactor operating under adiabatic conditions and containing a single bed of reforming catalyst, thus producing a raw synthesis gas containing an amount of nitrogen larger than that required to convert to ammonia all the potential hydrogen contained therein.

— converting essentially all the carbon monoxide contained in said raw synthesis gas to carbon dioxide and hydrogen, by reacting said gas with steam in the presence of one or more conversion catalyst,

— removing essentially all the carbon dioxide contained in the synthesis gas issued from the converting step of the carbon monoxide by scrubbing said gas with a suitable solvent,

— methanating of the carbon oxides by reacting said oxides with part of the hydrogen contained in said gas, in the presence of a methanation catalyst,

— separating by cryogeny the excess nitrogen contained in the gas, thereby obtaining on the one hand a final synthesis gas having essentially the stoichiometric composition required for ammonia, synthesis, and on the other hand a nitrogen rich residual gas,

the process being characterized in that:

— only a fraction of the feedstock, representing 5 to 70 percent of the total, is subjected to the primary reforming, the gas issued from this primary reforming step having a temperature between 680° and 820°C,

— the fraction of feedstock not subjected to the primary reforming is combined with the gas containing hydrogen issued from the primary reforming, the mixture thus obtained, which contains at least 25 percent methane equivalent on a dry gas basis, being subjected to the secondary reforming,

— the gas issued from the secondary reforming is at a temperature between 850 and 1100°C, and has a methane percentage of less than one-tenth of the percent methane equivalent contained in the mixture constituting the feedstock for said secondary reforming;

— the amount of air involved in the secondary reforming is such that the molar $H_2/N_2$ ratio of the gas issued from the methanation step is less than 2.4, and

— said cryogenic separation is performed by distillation at a temperature between −170 and −195°C.

2. Process according to claim 1, characterized in that at least a part of the gas released by the partial expansion of the solvent used in the removing step of the carbon dioxide is recycled to any point of the process sequence upstream of said secondary air reforming.

3. Process according to claim 1 or 2, characterized in that the heat contained in the gas issued from the converting step of the carbon monoxide is partially used to heat water, and the water thus heated is further used to saturate with steam at least a part of the feedstock by direct countercurrent contact.

4. Process according to any one of claims 1 to 3 characterized in that the heat contained in the gas issued from the converting step of the carbon monoxide is partially used to heat water, and the water thus heated is further used to saturate with steam the compressed air for the secondary reforming, by direct countercurrent contact.

5. Process for producing ammonia from the synthesis gas obtained with the process according to any one of claims 1 to 4, comprising: compressing this synthesis gas, injecting said gas into a synthesis loop producing ammonia by contact with a catalyst, and withdrawing ammonia thus produced as a liquid, characterized in that the liquid ammonia withdrawn from the synthesis loop is expanded to a pressure above that of said synthesis gas, the gas released by said expansion being at least partially recycled to any point upstream of the cryogenic separation step of the synthesis gas producing process.

6. Process according to claim 5, characterized in that a purge is extracted from the ammonia synthesis loop, after separation of the liquid ammonia, then expanded to a pressure above that of said synthesis gas, and finally at least partially recycled to any point upstream of the cryogenic separation step of the synthesis gas producing process.

**Patentansprüche**

1. Verfahren zur Erzeugung von Ammoniaksynthesegas, das darin besteht, ein Kohlenwasserstoffe enthaltendes, entschwefeltes Ausgangsmaterial bei einem Mindestdruck von 30 bar den aufeinanderfolgenden Stufen zu unterwerfen:

— primärem Dampfreformieren durch Zufuhr von Wasserdampf und indirektes Erhitzen in Rohren, die einen Reformierkatalysator enthalten, um so ein Wasserstoff enthaltendes Gas zu erzeugen,

— sekundärem Reformieren mit Luft in einer einzigen Stufe durch Reaktion mit Druckluft in einem adiabatisch arbeitenden Reaktor, der ein einziges Reformierkatalysatorbett enthält, um so ein rohes Synthesegas zu erzeugen, das einen höheren Stickstoffgehalt, als zum Umwandeln des in dem Gas potentiell enthaltenen gesamten Wasserstoffs nötig wäre, enthält,

— Umwandlung quasi der Gesamtmenge des Kohlenoxids des rohen Synthesegases in Kohlendioxid und Wasserstoff durch Einwirkung des Wasserdampfs und in Gegenwart eines oder mehrerer Umwandlungskatalysatoren,

— Entfernen quasi der Gesamtmenge des in dem aus der Umwandlungsstufe des Kohlenoxids stammenden Synthesegas enthaltenen Kohlenoxids durch Waschen des Gases mit einem geeigneten Lösungsmittel,

— Methanbildung der Kohlenoxide durch deren Umsetzung mit einem Teil des im Gas enthaltenen Wasserstoffs bei Berührung mit einem Methanbildungskatalysator,

— Tieftemperaturabtrennung des Überschusses an im Gas enthaltenem Stickstoff, was so einerseits zu einem endgültigen Synthesegas mit der praktisch für die Ammoniaksynthese nötigen stöchiometrischen Zusammensetzung und andererseits zu einem an Stickstoff reichem Restgas führt,

wobei sich das Verfahren dadurch auszeichnet, daß

— nur ein Teil des Ausgangsmaterials zwischen 5 und 70% der Gesamtmenge beim primären Reformieren behandelt wird, wobei das diese primäre Reformierstufe verlassende Gas eine Temperatur zwischen 680°C und 820°C hat,

— der Teil des Ausgangsmaterials, der das primäre Reformieren nicht erfahren hat, mit dem den Wasserstoff enthaltenden Gas aus dem primären Reformieren zusammengebracht wird, wobei das so erhaltene Gemisch, das mindestens 25% an Methan-Äquivalent auf der Basis trockenen Gases enthält, einem sekundären Reformieren unterworfen wird,

— das aus dem sekundären Reformieren hervorgehende Gas auf einer Temperatur zwischen 850 und 1100°C ist und bei einem Methan-Prozentsatz unter dem zehnten Teil des Prozentsatzes des in dem die Charge des sekundären Reformierens darstellenden Gemisch enthaltenen Methan-Äquivalents hat,

— die im sekundären Reformieren ins Spiel gebrachte Luftmenge so ist, daß das molekulare Verhältnis $H_2/N_2$ des die Methanbildungsstufe verlassenden Gases unter 2,4 ist und

— die Tiefkühlabtrennung durch Destillation bei einer Temperatur zwischen −170 und −195°C durchgeführt wird.

2. Verfahren nach Anspruch 1, dadurch gekennzeichnet, daß wenigstens ein Teil des durch teilweise Entspannung des in der Stufe des Entfernens des Kohlendioxids verwendeten Lösungsmittels freigesetzten Gases an irgend einer Stelle vor dem sekundären Reformieren mit Luft in das Verfahren rückgeführt wird.

3. Verfahren nach Anspruch 1 oder 2, dadurch gekennzeichnet, daß die in dem die Umwandlungsstufe des Kohlenoxids verlassenden Gas enthaltene Wärme teilweise zum Erwärmen des Wassers genutzt wird und das so erwärmte Wasser dann zum Sättigen wenigstens eines Teils des Ausgangsmaterials mit Wasserdampf durch direkte Berührung im Gegenstrom verwendet wird.

4. Verfahren nach irgend einem der Ansprüche 1 bis 3, dadurch gekennzeichnet, daß die in dem die Stufe der Umwandlung des Kohlenoxids verlassenden Gas enthaltene Wärme teilweise zum Erwärmen des Wassers genutzt wird und das so erwärmte Wasser dann zum Sättigen der für das sekundäre Reformieren bestimmten Druckluft durch direkten Kontakt im Gegenstrom verwendet wird.

5. Verfahren zur Erzeugung von Ammoniak aus dem nach dem Verfahren gemäß irgend einem der Ansprüche 1 bis 4 erhaltenen Synthesegas, das darin besteht, dieses Synthesegas zu komprimieren, es in einen das Ammoniak bei Berührung mit einem Katalysator erzeugenden Synthesekreis einzubringen und das so erzeugte Ammoniak in flüssiger Form abzuziehen, dadurch gekennzeichnet, daß das aus dem Synthesekreis abgezogene flüssige Ammoniak auf einen Druck über dem des Synthesegases entspannt wird, wobei das durch diese Entspannung angefallene Gas zumindest zum Teil an irgend einem Punkt vor der Tieftemperatur-Abtrennstufe des Verfahrens der Synthesegaserzeugung rückgeführt wird.

6. Verfahren nach Anspruch 5, dadurch gekennzeichnet, daß aus dem Ammoniaksynthesekreis nach Abtrennung des flüssigen Ammoniaks eine Spülung abgezogen, dann auf einen Druck über dem des Synthesegases entspannt und schließlich zumindest teilweise an irgend einer Stelle vor der Tieftemperaturabtrennstufe des Verfahrens zum Erzeugen des Synthesegases rückgeführt wird.

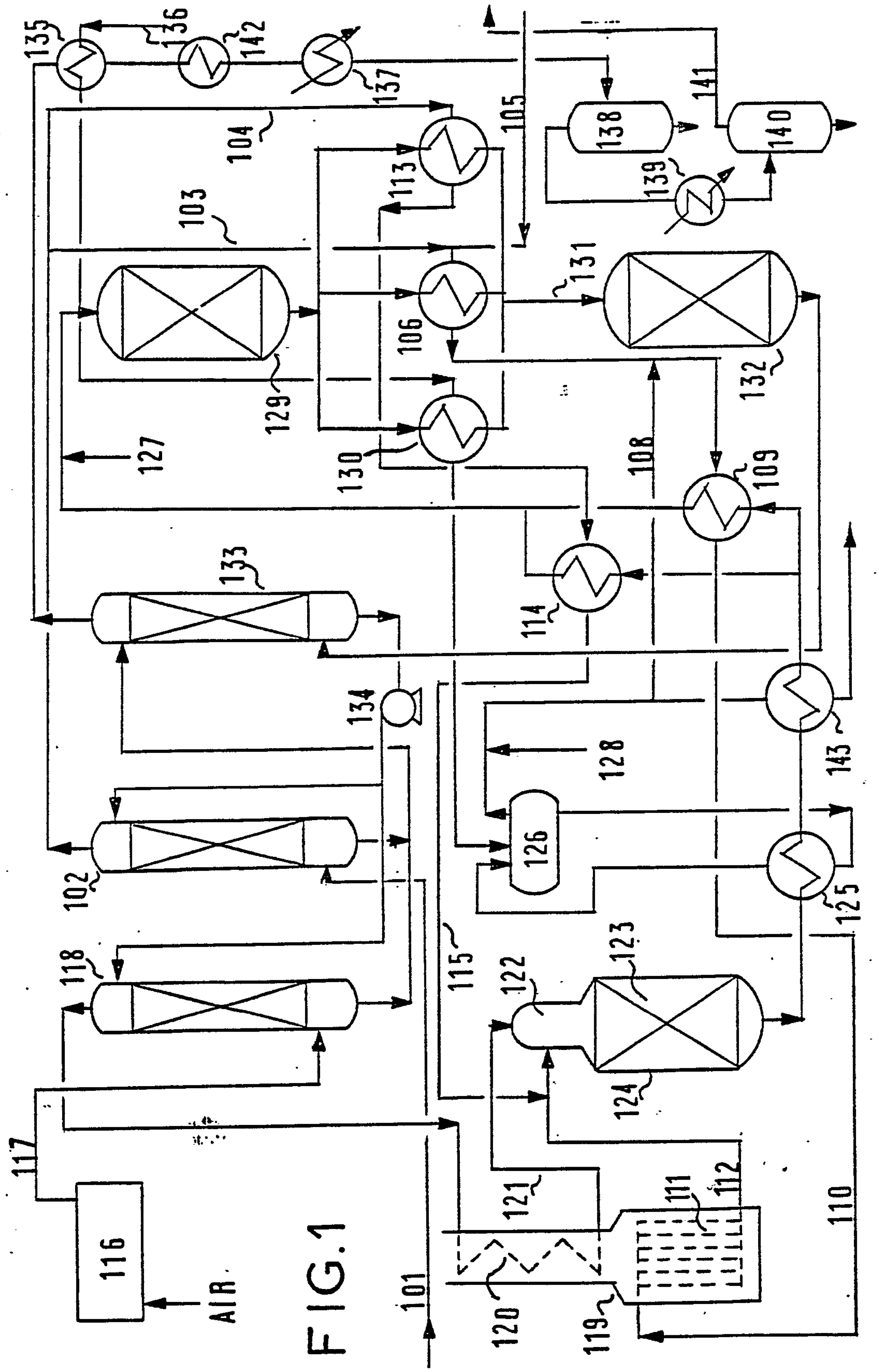

101
102
103
104
105
106
108
109
110
111
112
113
114
115
116
117
118
119
120
121
122
123
124
125
126
127
128
129
130
131
132
133
134
135
136
137
138
139
140
141
142
143
AIR


FIG.1

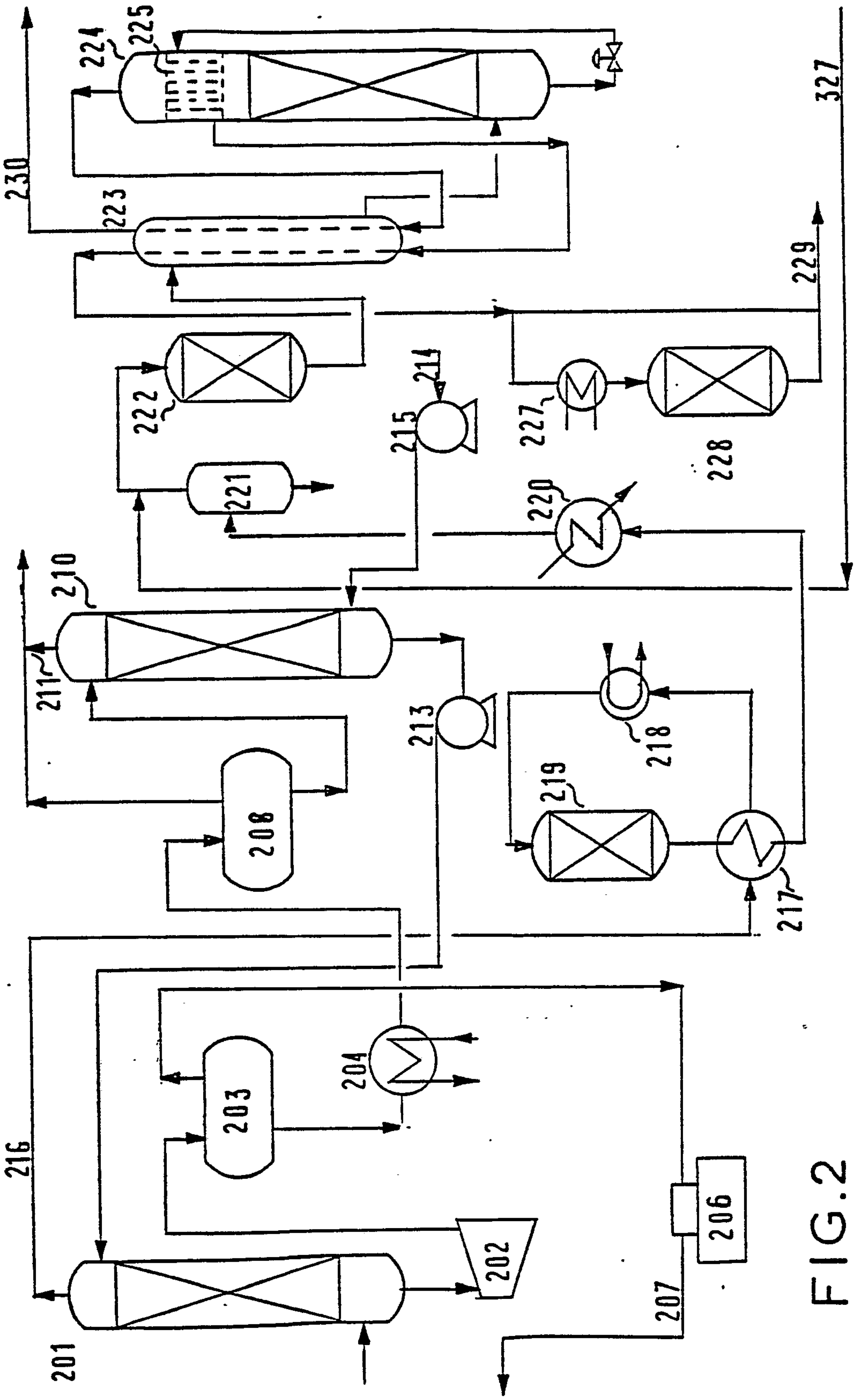

201
202
203
204
206
207
208
210
211
213
214
215
216
217
218
219
220
221
222
223
224
225
227
228
229
230
327


FIG.2

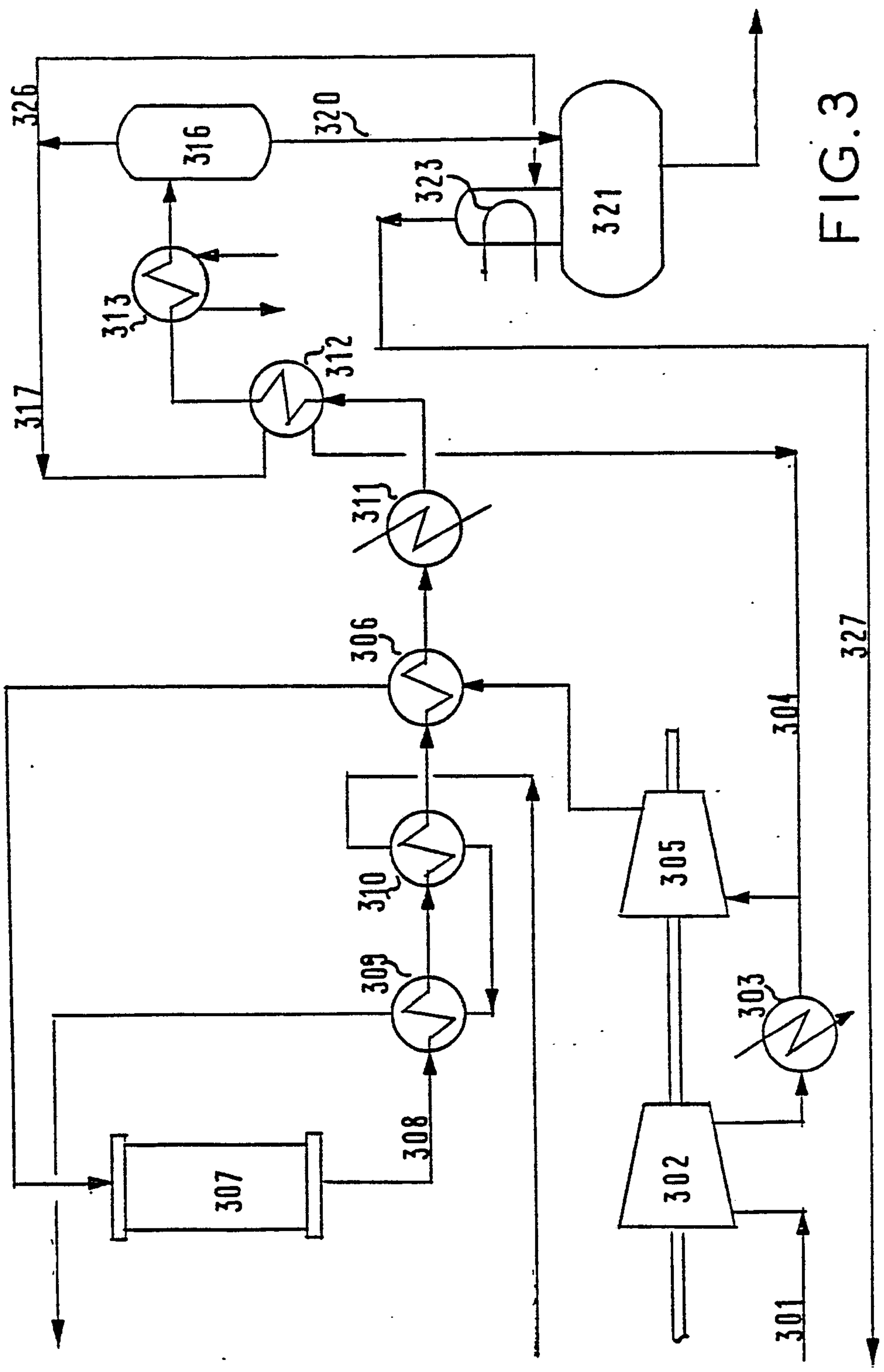
301
302
303
304
305
306
307
308
309
310
311
312
313
316
317
320
321
323
326
327

FIG. 3